# EUROPEAN PATENT APPLICATION

(11) **EP 4 819 656 A1**
(43) Date of publication of application: **07.10.2026**
(21) Application number: 24909879.9
(22) Date of filing: 21.08.2024
(51) Int. Cl.: H04W 8/24

(54) **CHARGING PILE UPGRADING METHOD AND APPARATUS**

(30) Priority: 26.12.2023 CN 202311819012
(71) Applicant: Yinwang Intelligent Technologies Co., Ltd., Shenzhen, Guangdong 518110 (CN)
(72) Inventor: DING, Kuangzheng, Shenzhen, Guangdong 518129 (CN); XU, Pinghong, Shenzhen, Guangdong 518129 (CN)
(74) Representative: Henselmann, Alexander Gerhard
(86) International application number: PCT/CN2024/113662
(87) International publication number: WO 2025/138929

(57) **Abstract**

This application provides a charging pile upgrade method and apparatus, to upgrade a charging pile. The method includes: receiving request information from a first charging terminal, where the request information is used to request code used for upgrading the charging pile; and sending third code to the first charging terminal when a version of first code is earlier than a version of second code, where the first code is run by the charging pile and is used by the charging pile to supply power to a charging terminal, the second code is run by the first charging terminal and is used by the first charging terminal to perform charging, and the third code is used to upgrade the first code.

## Description

### CROSS-REFERENCE TO RELATED APPLICATIONS

This application claims priority to Chinese Patent Application No. 202311819012.2, filed with the China National Intellectual Property Administration on December 26, 2023 and entitled "CHARGING PILE UPGRADE METHOD AND APPARATUS", which is incorporated herein by reference in its entirety.

### TECHNICAL FIELD

This application relates to the field of energy technologies, and in particular, to a charging pile upgrade method and apparatus.

### BACKGROUND

With continuous development of new energy vehicles, charging piles and charging technologies are evolving rapidly. Therefore, during use of a charging pile, a software version of the charging pile needs to be upgraded, to improve performance of the charging pile, for example, to enhance charging stability, increase the charging rate, or enable the charging pile to support fast charging for diversified vehicle models.

Currently, an over-the-air technology (over-the-air technology, OTA) manner is usually used to upgrade charging piles. However, charging piles are usually installed in locations with a weak network signal (for example, underground parking lots or remote areas). Therefore, some charging piles may fail to obtain an OTA upgrade software package due to the weak network signal, and consequently cannot be upgraded.

### SUMMARY

Embodiments of this application provide a charging pile upgrade method and apparatus, to upgrade a charging pile.

**According to a first aspect, an embodiment of this application provides a charging pile upgrade method. The method may be performed by a server or a chip in the server.** For ease of description, an example in which the server performs the charging pile upgrade method is used for description. The method includes: receiving request information from a first charging terminal, where the request information is used to request code used for upgrading a charging pile; and sending third code to the first charging terminal when a version of first code is earlier than a version of second code, where the first code is run by the charging pile and is used by the charging pile to supply power to a charging terminal, the second code is run by the first charging terminal and is used by the first charging terminal to perform charging, and the third code is used to upgrade the first code.

The "charging terminal" may be a device that needs to be charged, for example, a vehicle, a robot, a ship, or an airplane. This is not limited in embodiments of this application.

In this embodiment of this application, when a software version of the charging pile is earlier than a software version of the first charging terminal, the server may send upgrade code of the charging pile (namely, the code used for upgrading the charging pile, for example, the third code) to the first charging terminal, so that the first charging terminal can provide the upgrade code for the charging pile. However, a distance between the first charging terminal and the charging pile may be short, and the upgrade code can be transmitted between the first charging terminal and the charging pile through short-range communication without using a 3rd generation partnership project (3rd generation partnership project, 3GPP) network. Therefore, even if the charging pile is disposed in a place with a weak signal, the software version of the charging pile can be upgraded, so that the charging pile can obtain updated charging performance. In addition, after the software version of the charging pile is upgraded, a version of charging software of the charging pile matches a version of charging software of the first charging terminal, so that the first charging terminal can experience the updated charging performance of the charging pile when being charged by the charging pile, and a problem like a charging failure that may be caused by a software version mismatch can be reduced.

In a possible design, before sending the third code to the first charging terminal, the method further includes: receiving first information from the first charging terminal, where the first information indicates that the first charging terminal supports establishing a short-range communication connection to the charging pile. In this design, after the first charging terminal notifies that the first charging terminal supports establishing the short-range communication connection to the charging pile, the server sends the upgrade code of the charging pile to the first charging terminal. This can increase a success probability of providing the upgrade code by the first charging terminal for the charging pile.

In a possible design, before sending the third code to the first charging terminal, the method further includes: receiving second information from the first charging terminal, where the second information indicates that the first charging terminal is to be charged by the charging pile. In this design, after receiving a scheduled charging indication (for example, the second information) from the first charging terminal, the server sends the upgrade code of the charging pile to the first charging terminal. That the first charging terminal is to be charged by the charging pile means that the distance between the first charging terminal and the charging pile is short. In this case, there is a high probability that the first charging terminal successfully establishes the short-range communication connection to the charging pile. Therefore, the success probability of providing the upgrade code by the first charging terminal for the charging pile can be increased.

The second information may be determined based on a scheduled charging operation of a user.

In this embodiment of this application, the first information and the second information may be same information, or may be different information.

In a possible design, the method further includes: sending third information to user equipment associated with the first charging terminal, where the third information indicates the user equipment to output first prompt information, and the first prompt information is used to query a user whether to allow the first charging terminal to provide, for the charging pile, code used for upgrade; and receiving fourth information from the user equipment, where the fourth information indicates that the user allows the first charging terminal to provide, for the charging pile, the code used for upgrade. The user equipment associated with the first charging terminal may be a vehicle-mounted display, a mobile phone, a smartwatch, a tablet computer, or the like.

In this design, the server may obtain, by using the user equipment associated with the first charging terminal, permission of the user for the first charging terminal to provide the upgrade code for the charging pile, so that the user may learn a process in which the first charging terminal provides the upgrade code for the charging pile.

In this embodiment of this application, after the server sends the third code to the first charging terminal, there are a plurality of cases in which the first charging terminal provides the third code for the charging pile, including but not limited to the following cases:
Case 1: The server sends fifth information to the first charging terminal, where the fifth information indicates that the charging pile cannot download, from the server, the code used for upgrade. In Case 1, when the first charging terminal is notified that the charging pile cannot download, from the server, the code used for upgrade, and the first charging terminal receives, from the server, the third code used for upgrading the charging pile, the first charging terminal may actively send the third code to the charging pile.
Case 2: The server sends fifth information to the first charging terminal, where the fifth information indicates the first charging terminal to send the third code to the charging pile. In Case 2, after receiving an indication from the server, the first charging terminal sends the third code to the charging pile.
Case 3: After the server sends the third code to the first charging terminal, the first charging terminal receives the third code, and if the first charging terminal finds that the third code is used for upgrading the charging pile, the first charging terminal actively sends the third code to the charging pile without waiting for an indication message from the server. In this way, communication overheads of the server can be reduced.

In a possible design, the method further includes: receiving sixth information from the first charging terminal, where the sixth information indicates that the first charging terminal cannot establish the short-range communication connection to the charging pile, or indicates that the first charging terminal cannot send, to the charging pile, the code used for upgrade; querying for a second charging terminal that supports establishing a short-range communication connection to the charging pile; and sending the third code to the second charging terminal. In this design, when the first charging terminal cannot establish the short-range communication connection to the charging pile, the server may query for a charging terminal (for example, the second charging terminal) that supports establishing a short-range communication connection to the charging pile, and send the third code to the second charging terminal, so that the second charging terminal can provide the upgrade code for the charging pile, to further increase a probability of successfully upgrading the charging pile.

**According to a second aspect, an embodiment of this application provides a charging pile upgrade method.** The method may be performed by a first charging terminal or a chip in the first charging terminal. The method includes: The first charging terminal receives third code from a server, where the third code is used to upgrade first code when a version of the first code is earlier than a version of second code, the first code is run by a charging pile and is used by the charging pile to supply power to a charging terminal, and the second code is run by the first charging terminal and is used by the first charging terminal to perform charging. The first charging terminal sends the third code to the charging pile through a short-range communication connection.

In a possible design, the method further includes: sending first information to the server, where the first information indicates that the first charging terminal supports establishing the short-range communication connection to the charging pile.

In a possible design, the method further includes: sending second information to the server, where the second information indicates that the first charging terminal is to be charged by the charging pile.

In this embodiment of this application, the first information and the second information may be same information, or may be different information.

In this embodiment of this application, there are a plurality of cases in which the first charging terminal provides the third code for the charging pile, including but not limited to the following cases:
Case 1: The first charging terminal receives fifth information from the server, where the fifth information indicates that the charging pile cannot download, from the server, code used for upgrade. In Case 1, when the first charging terminal is notified that the charging pile cannot download, from the server, the code used for upgrade, and the first charging terminal receives, from the server, the third code used for upgrading the charging pile, the first charging terminal may actively send the third code to the charging pile.
Case 2: The first charging terminal receives fifth information from the server, where the fifth information indicates the first charging terminal to send the third code to the charging pile. In Case 2, after receiving an indication from the server, the first charging terminal sends the third code to the charging pile.
Case 3: The first charging terminal receives the third code, and if the first charging terminal finds that the third code is used for upgrading the charging pile, the first charging terminal actively sends the third code to the charging pile without waiting for an indication message from the server.

In a possible design, when the first charging terminal cannot establish the short-range communication connection to the charging pile, the first charging terminal sends sixth information to the server, where the sixth information indicates that the first charging terminal cannot establish the short-range communication connection to the charging pile, or indicates that the first charging terminal cannot send, to the charging pile, the code used for upgrade.

**According to a third aspect, an embodiment of this application provides a charging pile upgrade method. The method may be performed by a first charging terminal.** The method further includes: obtaining third code from a server when a version of first code is earlier than a version of second code, where the first code is run by a charging pile and is used by the charging pile to supply power to a charging terminal, and the second code is run by the first charging terminal and is used by the first charging terminal to perform charging; and sending the third code to the charging pile through a short-range communication connection, where the third code is used to upgrade the first code.

In the method, when a software version of the charging pile is earlier than a software version of the first charging terminal, the first charging terminal may actively obtain upgrade code (for example, the third code) of the charging pile from the server, and provide the upgrade code for the charging pile. In addition, a distance between a target charging terminal and the charging pile may be short, and the upgrade code can be transmitted between the target charging terminal and the charging pile through short-range communication without using a 3GPP network. Therefore, even if the charging pile is disposed in a place with a weak signal, the software version of the charging pile can be upgraded, so that the charging pile can obtain updated charging performance. In addition, after the software version of the charging pile is upgraded, a version of charging software of the charging pile matches a version of charging software of the target charging terminal, so that the target charging terminal can experience the updated charging performance of the charging pile when being charged by the charging pile.

In a possible design, before obtaining the third code from the server, the method further includes: sending first information to the server, where the first information indicates that the first charging terminal supports establishing a short-range communication connection to the charging pile.

In a possible design, before obtaining the third code from the server, the method further includes: sending second information to the server, where the second information indicates that the first charging terminal is to be charged by the charging pile.

In a possible design, the method further includes: sending third information to user equipment associated with the first charging terminal, where the third information indicates the user equipment to output first prompt information, and the first prompt information is used to query a user whether to allow the first charging terminal to provide, for the charging pile, code used for upgrade; and receiving fourth information from the user equipment, where the fourth information indicates that the user allows the first charging terminal to provide, for the charging pile, the code used for upgrade. In this design, the first charging terminal may send the third information to the user equipment associated with the first charging terminal, so that the first charging terminal may obtain, by using the user equipment associated with the first charging terminal, permission of the user for the first charging terminal to provide the upgrade code for the charging pile, and the user learns a process in which the first charging terminal provides the upgrade code for the charging pile.

In a possible design, the method further includes: receiving a first request from the charging pile, where the first request is used to request the first charging terminal to provide, for the charging pile, the code used for upgrade. In this design, the first charging terminal may provide the upgrade code for the charging pile when receiving a request from the charging pile, so that the upgrade code provided by the first charging terminal for the charging pile meets a requirement of the charging pile.

In a possible design, the method further includes: receiving seventh information, where the seventh information indicates the first code used by the charging pile, or indicates version information of the first code. In this design, the first charging terminal may determine, based on a received indication message, the first code currently used by the charging pile, and then the charging pile may compare the software version of the first charging terminal with the software version of the charging pile, so that the first charging terminal may provide the upgrade code for the charging pile when the software version of the charging pile is earlier than the software version of the first charging terminal.

In a possible design, before sending the third code to the charging pile through the short-range communication connection, the method further includes: If the first charging terminal cannot establish the short-range communication connection to the charging pile, the first charging terminal may further send sixth information to the server, to indicate that the first charging terminal cannot establish the short-range communication connection to the charging pile, or indicate that the first charging terminal cannot send, to the charging pile, the code used for upgrade, so that the server queries for a second charging terminal that supports establishing a short-range communication connection to the charging pile.

**According to a fourth aspect, an embodiment of this application provides a charging pile upgrade method. The method may be performed by a server.** The method further includes: determining that a first charging terminal supports establishing a short-range communication connection to a charging pile; and sending third code to the first charging terminal. The third code is used to upgrade first code when a version of the first code is earlier than a version of second code; the first code is run by the charging pile and is used by the charging pile to supply power to a charging terminal, and the second code is run by the first charging terminal and is used by the first charging terminal to perform charging; and the third code is sent to the charging pile through the short-range communication connection.

In a possible design, before sending the third code to the first charging terminal, the method further includes: receiving first information from the first charging terminal, where the first information indicates that the first charging terminal supports establishing the short-range communication connection to the charging pile.

In a possible design, before sending the third code to the first charging terminal, the method further includes: receiving second information from the first charging terminal, where the second information indicates that the first charging terminal is to be charged by the charging pile.

In a possible design, the method further includes: receiving sixth information from the first charging terminal, where the sixth information indicates that the first charging terminal cannot establish the short-range communication connection to the charging pile, or indicates that the first charging terminal cannot send, to the charging pile, code used for upgrade; querying for a second charging terminal that supports establishing a short-range communication connection to the charging pile; and sending the third code to the second charging terminal.

In a possible design, the method further includes: sending seventh information to the first charging terminal, where the seventh information indicates the first code used by the charging pile, or indicates version information of the first code.

**According to a fifth aspect, an embodiment of this application provides a charging pile upgrade method. The method may be performed by a charging pile.** The method further includes: sending a first request to a first charging terminal through a short-range communication connection when a version of first code is earlier than a version of second code, where the first request is used to request code for upgrading the charging pile, the first code is run by the charging pile and is used by the charging pile to supply power to a charging terminal, and the second code is run by the first charging terminal and is used by the first charging terminal to perform charging; receiving third code from the first charging terminal through the short-range communication connection; and upgrading the first code based on the third code.

In the method, when a software version of the charging pile is earlier than a software version of the first charging terminal, the charging pile may request upgrade code of the charging pile from the first charging terminal. In addition, a distance between a target charging terminal and the charging pile may be short, and the upgrade code can be transmitted between the target charging terminal and the charging pile through short-range communication without using a 3GPP network. Therefore, even if the charging pile is disposed in a place with a weak signal, the software version of the charging pile can be upgraded, so that the charging pile can obtain updated charging performance. In addition, after the software version of the charging pile is upgraded, a version of charging software of the charging pile matches a version of charging software of the target charging terminal, so that the target charging terminal can experience the updated charging performance of the charging pile when being charged by the charging pile.

In a possible design, the method further includes: receiving eighth information, where the eighth information indicates the second code used by the first charging terminal, or indicates version information of the second code. In this design, the charging pile may receive the second code or related information of the second code from the first charging terminal, so that the charging pile can compare the version of the first code with the version of the second code.

**According to a sixth aspect, an embodiment of this application provides a charging pile upgrade method. The method may be performed by** a first charging terminal. The method further includes: receiving a first request from a charging pile through a short-range communication connection, where the first request is used to request code for upgrading the charging pile; and in response to the first request, obtaining third code from a server and sending the third code to the first charging terminal, where the third code is used to upgrade first code when a version of the first code is earlier than a version of second code, the first code is run by the charging pile and is used by the charging pile to supply power to a charging terminal, and the second code is run by the first charging terminal and is used by the first charging terminal to perform charging.

In a possible design, the method further includes: sending eighth information, where the eighth information indicates the second code used by the first charging terminal, or indicates version information of the second code.

According to a seventh aspect, an embodiment of this application provides a charging pile upgrade apparatus. The charging pile upgrade apparatus may be any one of the charging pile, the server, the target charging terminal, and the first charging terminal, an electronic device (for example, a chip system) configured in any one of the charging pile, the server, the target charging terminal, and the first charging terminal, or a large device including any one of the charging pile, the server, the target charging terminal, and the first charging terminal. The communication apparatus includes a corresponding means (means) or module configured to perform the first aspect or any optional implementation.

According to an eighth aspect, an embodiment of this application provides a chip system. The chip system includes a processor, the processor is coupled to a memory, the memory is configured to store instructions, and when the instructions are executed by the processor, the method according to any one of the first aspect to the sixth aspect is implemented.

According to a ninth aspect, an embodiment of this application provides a computer-readable storage medium. The computer-readable storage medium is configured to store a computer program or instructions. When the computer program or the instructions are run, the method according to any one of the first aspect to the sixth aspect is implemented.

According to a tenth aspect, an embodiment of this application provides a computer program product including instructions. When the computer program product runs on a computer, the method according to any one of the first aspect to the sixth aspect is implemented.

For beneficial effects of any one of the technical solutions in the second aspect to the tenth aspect, refer to the beneficial effects of the corresponding technical solution in the first aspect. Repeated content is not listed herein again.

### BRIEF DESCRIPTION OF DRAWINGS

FIG. 1 is a diagram of an architecture of a system according to an embodiment of this application;
FIG. 2 is a diagram of a scenario according to an embodiment of this application;
FIG. 3A is a schematic flowchart 1 of a first charging pile upgrade method according to an embodiment of this application;
FIG. 3B is a schematic flowchart 2 of a first charging pile upgrade method according to an embodiment of this application;
FIG. 4 is a schematic flowchart of a second charging pile upgrade method according to an embodiment of this application;
FIG. 5 is a schematic flowchart of a third charging pile upgrade method according to an embodiment of this application;
FIG. 6 is a diagram of a structure of a charging pile upgrade apparatus according to an embodiment of this application; and
FIG. 7 is a diagram of a structure of a chip system according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

In embodiments of this application, unless otherwise specified, a quantity of nouns represents "a singular noun or a plural noun", that is, "one or more". "At least one" means one or more, and "a plurality of" means two or more. The term "and/or" describes an association relationship between associated objects, and indicates that three relationships may exist. For example, A and/or B may represent the following cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one of a, b, or c indicates a, b, c, a and b, a and c, b and c, or a, b, and c, where a, b, and c may be singular or plural.

In addition, it should be understood that in the descriptions of this application, the terms such as "first" and "second" are merely used for distinguishing and description, but should not be understood as indicating or implying relative importance, or should not be understood as a limitation on a sequence.

Embodiments of this application provide a charging pile upgrade method and apparatus, to upgrade a charging pile. In embodiments of this application, when a version of charging software code of the charging pile is earlier than a version of charging code of a target charging terminal, and the target charging terminal can establish a short-range communication connection to the charging pile, the target charging terminal may provide upgrade code for the charging pile. In this way, even if the charging pile is disposed in a place with a weak signal, the charging software code of the charging pile can be upgraded, so that a version of charging software of the charging pile matches a version of charging software of the target charging terminal, to effectively improve charging experience of a user.

With reference to the accompanying drawings, the following describes an architecture of a system to which embodiments of this application are applicable.

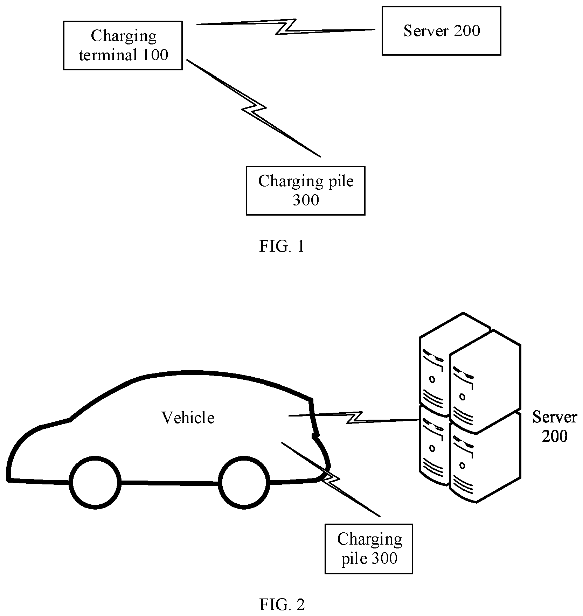

FIG. 1 shows an architecture of a system to which an embodiment of this application is applicable. The system includes a charging terminal 100, a server 200, and a charging pile 300.

The charging terminal 100 may be a device that needs to be charged, for example, a vehicle, a robot, a ship, or an airplane. This is not limited in embodiments of this application. The server 200 may be a cloud server or another server, and the cloud server may be implemented by using a virtual machine. The charging pile 300 may be an integrated charging pile or a split charging pile.

The server 200 may establish a communication connection to the charging terminal 100 or the server 200 by using a conventional internet protocol (internet protocol, IP) network, to implement communication interaction. Alternatively, the server 200 may establish a communication connection to the charging terminal 100 or the server 200 by using a mobile communication network (including an access network and a core network), to implement communication interaction. In addition, a short-range communication connection may be established between the charging terminal 100 and the charging pile 300, to implement communication interaction. For example, the short-range communication connection may be a wireless communication connection like a Bluetooth communication connection or a spark communication connection, or may be a wired communication connection.

It may be understood that the architecture shown in FIG. 1 may be used in a plurality of communication scenarios, for example, a 5th generation (5th Generation, 5G) communication system, a future 6th generation communication system and another evolved communication system, a long term evolution (long term evolution, LTE) communication system, vehicle to everything (vehicle to everything, V2X), long term evolution-vehicle (LTE-vehicle, LTE-V), vehicle to vehicle (vehicle to vehicle, V2V), internet of vehicles, machine type communication (machine type communication, MTC), internet of things (internet of things, IoT), long term evolution-machine to machine (LTE-machine to machine, LTE-M), and machine to machine (machine to machine, M2M). This is not limited in this application.

It may be understood that in FIG. 1, only one charging terminal and one charging pile are used as an example for description. In another embodiment, there may be a plurality of charging terminals and a plurality of charging piles. A quantity of charging terminals and a quantity of charging piles are not specifically limited in embodiments of this application.

FIG. 2 is a diagram of an application scenario to which an embodiment of this application is applicable. In FIG. 2, a vehicle is used as an example of the charging terminal 100. The vehicle may establish a short-range communication connection to the charging pile 300, and the vehicle may establish a long-range communication connection to the server 200. The server 200 may provide a charging software service for the charging terminal 100 and the charging pile 300, and manage related charging data, for example, provide charging-related software upgrade code for the charging terminal 100 and the charging pile 300. The charging pile 300 may supply power to the charging terminal 100.

The following describes a charging pile upgrade method provided in embodiments of this application with reference to the specific accompanying drawings.

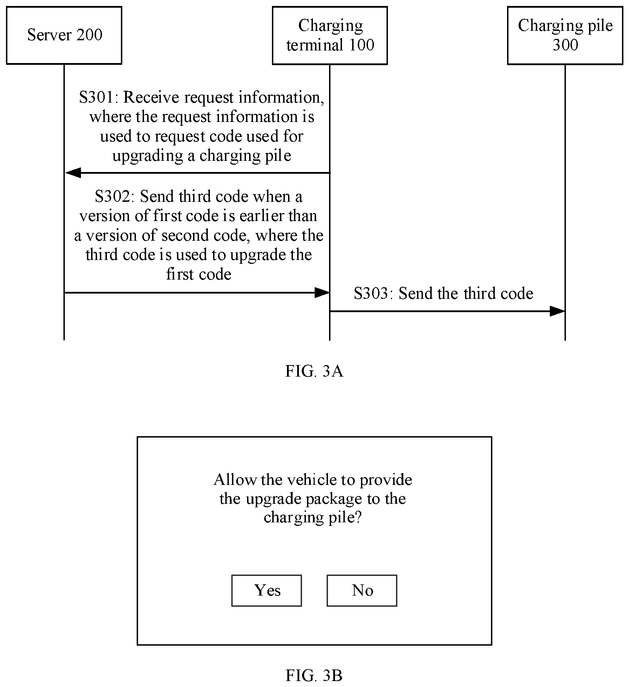

FIG. 3A is a schematic flowchart 1 of a first charging pile upgrade method according to an embodiment of this application. The method may be applied to the architecture of the system shown in FIG. 1. The method includes:
S301: A server 200 receives request information from a charging terminal 100, where the request information is used to request code used for upgrading a charging pile.

In a possible implementation, the server 200 may determine first code and second code. The first code is run by a charging pile 300 and is used by the charging pile 300 to supply power to the charging terminal, and the second code is run by the charging terminal 100 and is used by the charging terminal 100 to perform charging.

It can be learned from the foregoing descriptions that the server 200 may provide a charging software service for the charging terminal 100 and the charging pile 300, and manage related charging data. Therefore, when S301 is implemented, in one case, the server 200 may obtain version information of the first code and version information of the second code from a database. In another case, the server 200 may obtain version information of the first code and version information of the second code from the charging terminal 100, compare a version of the first code with a version of the second code, and perform step S302 when the version of the first code is earlier than the version of the second code. The version information may include, for example, a version number and/or release time.

S302: When the version of the first code is earlier than the version of the second code, the server 200 sends third code to the charging terminal 100, where the third code is used to upgrade the first code. Correspondingly, the charging terminal 100 receives the third code.

The third code is used to upgrade the first code. It may be understood that the third code is upgrade code corresponding to charging software of the charging pile 300, and the third code may be used to upgrade the charging software of the charging pile 300, to improve charging performance of the charging pile 300.

In this embodiment of this application, to increase a success probability of providing the upgrade code for the charging pile 300 by the charging terminal 100, before sending the third code to the charging terminal 100, the server 200 may first determine whether the charging terminal 100 has a capability of providing the upgrade code for the charging pile 300. The server 200 sends the third code to the charging terminal 100 only when the charging terminal 100 has the capability of providing the upgrade code for the charging pile 300, so that unnecessary communication overheads of the server 200 can be reduced. The server 200 may determine, in but not limited to the following manners, whether the charging terminal 100 has the capability of providing the upgrade code for the charging pile 300.

Manner 1: The server 200 receives first information from the charging terminal 100, where the first information indicates that the charging terminal 100 supports establishing a short-range communication connection to the charging pile 300. Correspondingly, the charging terminal 100 sends the first information.

In Manner 1, after receiving the first information, the server 200 may learn that the charging terminal 100 supports establishing the short-range communication connection to the charging pile 300. In this case, the server 200 considers that the charging terminal 100 has the capability of providing the upgrade code for the charging pile 300.

Manner 2: The server 200 receives second information from the charging terminal 100, where the second information indicates that the charging terminal 100 is to be charged by the charging pile 300. Correspondingly, the charging terminal 100 sends the second information. The second information may be determined based on a scheduled charging operation of a user.

In Manner 2, the second information is a scheduled charging indication from the charging terminal 100. After receiving the second information, the server 200 may learn that the charging terminal 100 is to be charged by the charging pile 300. In addition, that the charging terminal 100 is to be charged by the charging pile 300 means that a distance between the charging terminal 100 and the charging pile 300 may be short. In this case, there is a high probability that the charging terminal 100 successfully establishes the short-range communication connection to the charging pile 300, and the server 200 considers that the charging terminal 100 has the capability of providing the upgrade code for the charging pile 300.

Manner 3: The server 200 receives first information and second information from the charging terminal 100, where the first information indicates that the charging terminal 100 supports establishing a short-range communication connection to the charging pile 300, and the second information indicates that the charging terminal 100 is to be charged by the charging pile 300. Correspondingly, the charging terminal 100 sends the first information and the second information.

In Manner 3, the server 200 may learn, based on the first information and the second information, that there is a high probability that the charging terminal 100 successfully establishes the short-range communication connection to the charging pile 300. In this case, the server 200 considers that the charging terminal 100 has the capability of providing the upgrade code for the charging pile 300.

In this embodiment of this application, the first information and the second information may be same information, or may be different information. In other words, content indicated by the first information and content indicated by the second information may be indicated by using same information, or may be indicated by using different information.

Manner 4: The server 200 may determine, based on historical data (for example, a charging cycle) of charging the charging terminal 100 by the charging pile 300, whether the charging terminal 100 is to be charged by the charging pile in a first time period, and send the third code to the charging terminal 100 when determining that the charging terminal 100 is to be charged by the charging pile in the first time period.

In Manner 4, that the server 200 determines, based on the historical charging data of the charging pile 300, that the charging terminal 100 is to be charged by the charging pile 300 means that a distance between the charging terminal 100 and the charging pile 300 may be short in the first time period. In this case, there is a high probability that the charging terminal 100 successfully establishes the short-range communication connection to the charging pile 300, and the server 200 considers that the charging terminal 100 has the capability of providing the upgrade code for the charging pile 300.

Optionally, the server 200 may further send third information to user equipment associated with the charging terminal 100. The third information indicates the user equipment to output first prompt information, and the first prompt information is used to query the user whether to allow the charging terminal 100 to provide, for the charging pile 300, code used for upgrade. Correspondingly, after receiving the third information, the user equipment sends fourth information to the server 200. The fourth information indicates that the user allows the charging terminal 100 to provide, for the charging pile 300, the code used for upgrade. The server 200 sends the third code to the charging terminal 100 only after receiving the fourth information. In this way, the user learns a process in which the charging terminal 100 provides the upgrade code for the charging pile 300.

The first prompt information may be voice information, text information, image information, or the like. This is not specifically limited in embodiments of this application. The user equipment associated with the charging terminal 100 may be a vehicle-mounted display, a vehicle-mounted speaker, a mobile phone, a smartwatch, a tablet computer, or the like. For example, the charging terminal 100 is a vehicle, and the user equipment is a vehicle-mounted display. The vehicle-mounted display may display text information shown in FIG. 3B, to query the user whether to allow the vehicle to provide, for the charging pile, the code used for upgrade.

S303: The charging terminal 100 sends the third code to the charging pile 300. Correspondingly, the charging pile 300 receives the third code.

Implementation of S303 may include but is not limited to the following cases:
Case 1: The server 200 sends fifth information to the charging terminal 100, where the fifth information indicates that the charging pile 300 cannot download, from the server 200, the code used for upgrade. Correspondingly, the charging terminal 100 receives the fifth information. In this way, after receiving the fifth information, the charging terminal 100 may learn that the charging pile 300 cannot download, from the server 200, the code used for upgrade, and the charging terminal 100 receives, from the server 200, the third code used for upgrading the charging pile 300. In this case, the charging terminal 100 may actively send the third code to the charging pile 300.
Case 2: The server 200 sends fifth information to the charging terminal 100, where the fifth information indicates the charging terminal 100 to send the third code to the charging pile 300. Correspondingly, the charging terminal 100 receives the fifth information. In this way, the charging terminal 100 may send the third code to the charging pile 300 based on the server 200.
Case 3: After the server 200 sends the third code to the charging terminal 100, the charging terminal 100 receives the third code, and if the charging terminal 100 finds that the third code is used for upgrading the charging pile 300, the charging terminal 100 actively sends the third code to the charging pile 300 without waiting for an indication message from the server 200. In this way, communication overheads of the server 200 can be reduced.

In this embodiment of this application, after receiving the third code, the charging pile 300 may upgrade the first code based on the third code. In other words, the charging pile 300 may upgrade the charging software of the charging pile 300 based on the third code, to improve performance of the charging pile 300. For example, a charging rate of the charging pile 300 is upgraded. For another example, a charging warning function of the charging pile 300 is upgraded.

In the method shown in FIG. 3A, when a software version of the charging pile 300 is earlier than a software version of the charging terminal 100, the server 200 may send the upgrade code of the charging pile 300 (namely, the code used for upgrading the charging pile 300, for example, the third code) to the charging terminal 100, so that the charging terminal 100 can provide the upgrade code for the charging pile 300. In addition, the distance between the charging terminal 100 and the charging pile 300 may be short, and the upgrade code can be transmitted between the charging terminal 100 and the charging pile 300 through short-range communication without using a 3GPP network. Therefore, even if the charging pile 300 is disposed in a place with a weak signal, the software version of the charging pile 300 can be upgraded, so that the charging pile 300 can obtain updated charging performance. In addition, after the software version of the charging pile 300 is upgraded, a version of the charging software of the charging pile 300 matches a version of charging software of the charging terminal 100, so that the charging terminal 100 can experience the updated charging performance of the charging pile 300 when being charged by the charging pile 300.

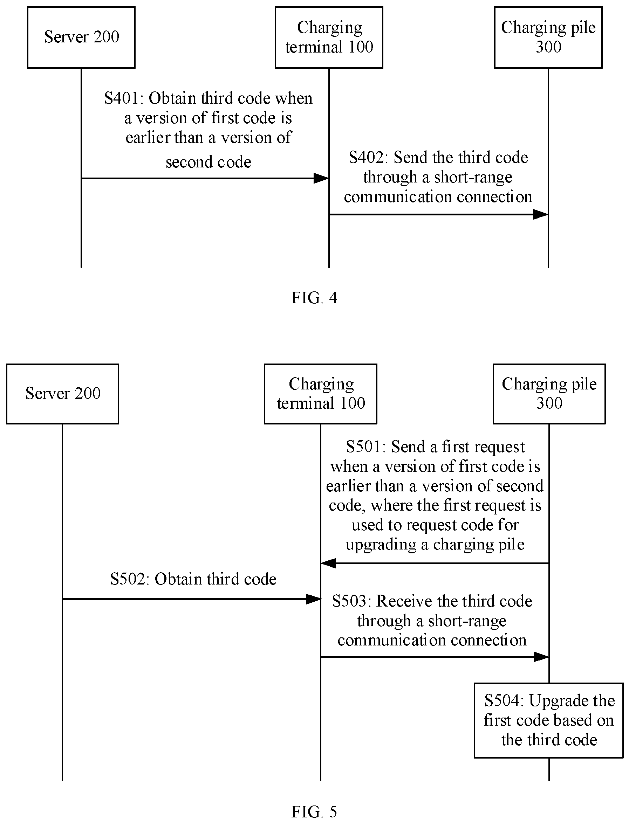

FIG. 4 is a schematic flowchart of a second charging pile upgrade method according to an embodiment of this application. The method may be applied to the architecture of the system shown in FIG. 1. The method includes:
S401: A charging terminal 100 obtains third code from a server 200 when a version of first code is earlier than a version of second code.

The first code is run by a charging pile 300 and is used by the charging pile 300 to supply power to a charging terminal, the second code is run by the charging terminal 100 and is used by the charging terminal 100 to perform charging, and the third code is used to upgrade the first code.

In a possible implementation, the charging terminal 100 obtains the version of the first code and the version of the second code, compares the version of the first code with the version of the second code, and performs S401 when the version of the first code is earlier than the version of the second code. Specifically, the charging terminal 100 may determine, by comparing version numbers and/or release time of the version of the first code and the version of the second code, whether the version of the first code is earlier than the version of the second code.

The charging terminal 100 may obtain the version of the second code from a local memory of the charging terminal 100; and the charging terminal 100 may receive seventh information, where the seventh information indicates the first code used by the charging pile 300, or indicates version information of the first code. The version information of the first code includes a version number and/or release time. In this way, the charging terminal 100 may determine, based on a received indication message, the first code currently used by the charging pile 300, and then the charging pile 300 may compare a software version of the charging terminal 100 (namely, the version of the first code) with a software version of the charging pile 300 (namely, the version of the second code), so that S401 is performed when the software version of the charging pile 300 is earlier than the software version of the charging terminal 100.

In this embodiment of this application, to enable the charging terminal 100 to successfully obtain the third code from the server 200, before the charging terminal 100 obtains the third code from the server 200, the server 200 needs to learn whether the charging terminal 100 has a capability of providing upgrade code for the charging pile 300. The server 200 sends the third code to the charging terminal 100 only when the charging terminal 100 has the capability of providing the upgrade code for the charging pile 300, so that unnecessary communication overheads of the server 200 can be reduced. For a specific implementation in which the server 200 determines whether the charging terminal 100 has the capability of providing the upgrade code for the charging pile 300, refer to related descriptions in FIG. 4. Details are not described herein again.

A specific implementation of S401 may include but is not limited to:
Manner 1: The charging terminal 100 sends request information to the server 200, where the request information is used to request to provide, for the charging pile 300, code used for upgrade. The server 200 sends the third code to the charging terminal 100 in response to the request information.
Manner 2: The charging terminal 100 sends first information to the server 200, where the first information indicates that the charging terminal 100 supports establishing a short-range communication connection to the charging pile 300. Correspondingly, the server 200 receives the first information. After receiving the first information, the server 200 may learn that the charging terminal 100 supports establishing the short-range communication connection to the charging pile 300. In this case, the server 200 considers that the charging terminal 100 has the capability of providing the upgrade code for the charging pile 300, and the server 200 actively sends the third code to the charging terminal 100.
Manner 3: The charging terminal 100 sends second information to the server 200, where the second information indicates that the charging terminal 100 is to be charged by the charging pile 300. Correspondingly, the server 200 receives the second information. Because the second information is a scheduled charging indication from the charging terminal 100, after receiving the second information, the server 200 may learn that the charging terminal 100 is to be charged by the charging pile 300. In addition, that the charging terminal 100 is to be charged by the charging pile 300 means that a distance between the charging terminal 100 and the charging pile 300 may be short. In this case, there is a high probability that the charging terminal 100 successfully establishes the short-range communication connection to the charging pile 300, and the server 200 considers that the charging terminal 100 has the capability of providing the upgrade code for the charging pile 300. In this case, the server 200 actively sends the third code to the charging terminal 100.
Manner 4: The charging terminal 100 sends first information and second information to the server 200, where the first information indicates that the charging terminal 100 supports establishing a short-range communication connection to the charging pile 300, and the second information indicates that the charging terminal 100 is to be charged by the charging pile 300. Correspondingly, the server 200 receives and sends the first information and the second information. The server 200 may learn, based on the first information and the second information, that there is a high probability that the charging terminal 100 successfully establishes the short-range communication connection to the charging pile 300. In this case, the server 200 considers that the charging terminal 100 has the capability of providing the upgrade code for the charging pile 300, and the server 200 actively sends the third code to the charging terminal 100.

In this embodiment of this application, the first information and the second information may be same information, or may be different information. In other words, content indicated by the first information and content indicated by the second information may be indicated by using same information, or may be indicated by using different information.

Manner 5: The charging terminal 100 may determine, based on historical data (for example, a charging cycle) of charging the charging terminal 100 by the charging pile 300, whether the charging terminal 100 is to be charged by the charging pile in a first time period, and send request information to the server 200 when determining that the charging terminal 100 is to be charged by the charging pile in the first time period, where the request information is used to request to provide, for the charging pile 300, code used for upgrade. The server 200 sends the third code to the charging terminal 100 in response to the request information.

In this embodiment of this application, the charging terminal 100 may further send third information to user equipment associated with the charging terminal 100, where the third information indicates the user equipment to output first prompt information, and the first prompt information is used to query a user whether to allow the charging terminal 100 to provide, for the charging pile 300, the code used for upgrade; and receive fourth information from the user equipment, where the fourth information indicates that the user allows the charging terminal 100 to provide, for the charging pile 300, the code used for upgrade. In this way, the charging terminal 100 may obtain, by using the user equipment associated with the charging terminal 100, permission of the user for the charging terminal 100 to provide the upgrade code for the charging pile 300, and the user learns a process in which the charging terminal 100 provides the upgrade code for the charging pile 300. For related descriptions of the first prompt information, refer to the foregoing descriptions.

S402: The charging terminal 100 sends the third code to the charging pile 300 through the short-range communication connection. Correspondingly, the charging pile 300 receives the third code.

When S402 is implemented, the charging terminal 100 may further receive a first request from the charging pile 300, where the first request is used to request the charging terminal 100 to provide, for the charging pile 300, the code used for upgrade. In this way, the charging terminal 100 may provide the upgrade code for the charging pile 300 when receiving a request from the charging pile 300, so that the upgrade code provided by the charging terminal 100 for the charging pile 300 meets a requirement of the charging pile 300. For example, the charging terminal 100 may send the third code to the charging terminal 100 in response to the first request.

In the method shown in FIG. 4, when the software version of the charging pile 300 is earlier than the software version of the charging terminal 100, the charging terminal 100 may actively obtain the upgrade code (for example, the third code) of the charging pile 300 from the server, and provide the upgrade code for the charging pile 300. In addition, a distance between a target charging terminal and the charging pile 300 may be short, and the upgrade code can be transmitted between the target charging terminal and the charging pile 300 through short-range communication without using a 3GPP network. Therefore, even if the charging pile 300 is disposed in a place with a weak signal, the software version of the charging pile 300 can be upgraded, so that the charging pile 300 can obtain updated charging performance. In addition, after the software version of the charging pile 300 is upgraded, a version of charging software of the charging pile 300 matches a version of charging software of the target charging terminal, so that the target charging terminal can experience the updated charging performance of the charging pile 300 when being charged by the charging pile 300.

In some other embodiments, before the charging terminal 100 sends the third code to the charging pile 300 through the short-range communication connection, if the charging terminal 100 cannot establish the short-range communication connection to the charging pile 300, the charging terminal 100 may further send sixth information to the server, to indicate that the charging terminal 100 cannot establish the short-range communication connection to the charging pile 300, or indicate that the first charging terminal cannot send, to the charging pile, the code used for upgrade, so that the server 200 queries for a second charging terminal that supports establishing a short-range communication connection to the charging pile 300. The server 200 may determine the second charging terminal based on a distance between the charging terminal and the charging pile 300, communication performance of the charging terminal, and the like.

FIG. 5 is a schematic flowchart of a third charging pile 300 upgrade method according to an embodiment of this application. The method may be applied to the architecture of the system shown in FIG. 1. The method includes:
S501: A charging pile 300 sends a first request to a charging terminal 100 when a version of first code is earlier than a version of second code, where the first request is used to request code for upgrading the charging pile 300.

The first code is run by the charging pile 300 and is used by the charging pile 300 to supply power to a charging terminal, and the second code is run by the charging terminal 100 and is used by the charging terminal 100 to perform charging.

In a possible implementation, the charging pile 300 obtains the version of the first code and the version of the second code, compares the version of the first code with the version of the second code, and performs S501 when the version of the first code is earlier than the version of the second code. Specifically, the charging terminal 100 may determine, by comparing version numbers and/or release time of the version of the first code and the version of the second code, whether the version of the first code is earlier than the version of the second code.

The charging pile 300 may obtain the version of the first code from a local memory of the charging pile 300; and the charging pile 300 may receive eighth information, where the eighth information indicates the second code used by the charging terminal 100, or indicates version information of the second code. The version information of the second code includes a version number and/or release time. In this way, the charging pile 300 may determine, based on a received indication message, the first code currently used by the charging terminal 100, and then the charging pile 300 may compare a software version of the charging terminal 100 (namely, the version of the first code) with a software version of the charging pile 300 (namely, the version of the second code), so that S501 is performed when the software version of the charging pile 300 is earlier than the software version of the charging terminal 100. Specifically, the charging terminal 100 may determine, by comparing version numbers and/or release time of the version of the first code and the version of the second code, whether the version of the first code is earlier than the version of the second code.

S502: The charging terminal 100 obtains third code from the server 200.

For a specific implementation of S502, refer to related descriptions of the specific implementation of S401. Details are not described herein again.

S503: The charging terminal 100 sends the third code to the charging pile 300 through the short-range communication connection. Correspondingly, the charging pile 300 receives the third code.

S504: The charging pile 300 upgrades the first code based on the third code.

In the method shown in FIG. 5, when the software version of the charging pile 300 is earlier than the software version of the charging terminal 100, the charging pile 300 may request upgrade code of the charging pile 300 from the charging terminal 100. In addition, a distance between a target charging terminal and the charging pile 300 may be short, and the upgrade code can be transmitted between the target charging terminal and the charging pile 300 through short-range communication without using a 3GPP network. Therefore, even if the charging pile 300 is disposed in a place with a weak signal, the software version of the charging pile 300 can be upgraded, so that the charging pile 300 can obtain updated charging performance. In addition, after the software version of the charging pile 300 is upgraded, a version of charging software of the charging pile 300 matches a version of charging software of the target charging terminal, so that the target charging terminal can experience the updated charging performance of the charging pile 300 when being charged by the charging pile 300.

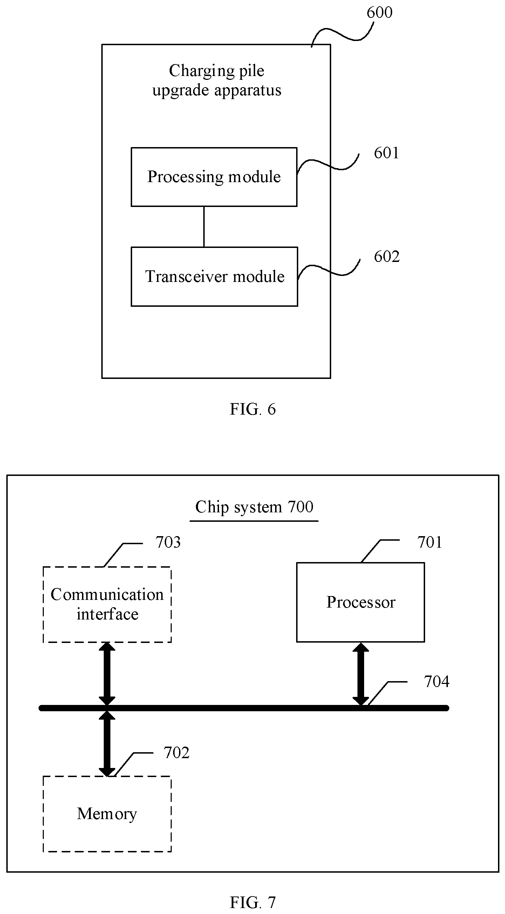

As shown in FIG. 6, an embodiment of this application further provides a charging pile upgrade apparatus 600. The apparatus may be configured to implement the methods in FIG. 3A to FIG. 5.

In an example 1, the apparatus 600 is used in a server, and the apparatus 600 includes:
a processing module 601, configured to determine first code and second code, where the first code is run by a charging pile and is used by the charging pile to supply power to a charging terminal, and the second code is run by a first charging terminal and is used by the first charging terminal to perform charging; and
a transceiver module 602, configured to send third code to the first charging terminal when a version of the first code is earlier than a version of the second code, where the third code is used to upgrade the first code.

It may be understood that the transceiver module 602 may be understood as a communication interface, and the communication interface has a function of receiving information from or sending information to another apparatus.

In an example 2, the apparatus 600 is used in a target charging terminal, and the apparatus 600 includes:
a transceiver module 602, configured to receive third code from a server, where the third code is used to upgrade first code when a version of the first code is earlier than a version of second code, the first code is run by a charging pile and is used by the charging pile to supply power to a charging terminal, and the second code is run by a first charging terminal and is used by the first charging terminal to perform charging, where the transceiver module 602 is further configured to send the third code to the charging pile through a short-range communication connection.

In an example 3, the apparatus 600 is used in a first charging terminal, and the apparatus 600 includes: a transceiver module 602, configured to obtain third code from a server when a version of first code is earlier than a version of second code, where the first code is run by a charging pile and is used by the charging pile to supply power to a charging terminal, and the second code is run by the first charging terminal and is used by the first charging terminal to perform charging, where the transceiver module 602 is further configured to send the third code to the charging pile through a short-range communication connection, where the third code is used to upgrade the first code.

In an example 4, the apparatus 600 is used in a server, and the apparatus 600 includes: a processing module 601, configured to: determine that a first charging terminal supports establishing a short-range communication connection to a charging pile; and send third code to the first charging terminal, where the third code is used to upgrade first code when a version of the first code is earlier than a version of second code, the first code is run by the charging pile and is used by the charging pile to supply power to a charging terminal, and the second code is run by the first charging terminal and is used by the first charging terminal to perform charging; and a transceiver module 602, configured to send the third code to the charging pile through the short-range communication connection.

In an example 5, the apparatus 600 is used in a charging pile, and the apparatus 600 includes: a transceiver module 602, configured to send a first request to a first charging terminal through a short-range communication connection when a version of first code is earlier than a version of second code, where the first request is used to request code for upgrading the charging pile, the first code is run by the charging pile and is used by the charging pile to supply power to a charging terminal, and the second code is run by the first charging terminal and is used by the first charging terminal to perform charging, where the transceiver module 602 is configured to receive third code from the first charging terminal through the short-range communication connection; and a processing module 601, configured to upgrade the first code based on the third code.

In an example 6, the apparatus 600 is used in a first charging terminal, and the apparatus 600 includes: a transceiver module 602, configured to: receive a first request from a charging pile through a short-range communication connection, where the first request is used to request code for upgrading the charging pile; and in response to the first request, obtain third code from a server and send the third code to the first charging terminal, where the third code is used to upgrade first code when a version of the first code is earlier than a version of second code, the first code is run by the charging pile and is used by the charging pile to supply power to a charging terminal, and the second code is run by the first charging terminal and is used by the first charging terminal to perform charging.

An embodiment of this application further provides a chip system. Refer to FIG. 7. The chip system 700 includes at least one processor. When program instructions are executed by the at least one processor 701, the foregoing method is implemented.

Optionally, the chip system further includes a communication interface 703, and the communication interface is configured to input or output information.

Optionally, the chip system further includes a memory 702. The memory 702 is coupled to the processor through the communication interface 703, and is configured to store the foregoing instructions, so that the processor reads, through the communication interface 703, the instructions stored in the memory.

It should be understood that a connection medium between the processor 701, the memory 702, and the communication interface 703 is not limited in embodiments of this application. In this embodiment of this application, in FIG. 7, the memory 702, the processor 701, and the communication interface 703 are connected through a communication bus 704. The bus is represented by a bold line in FIG. 7. A manner of connection between other components is merely an example for description, and does not impose a limitation. The bus may include an address bus, a data bus, a control bus, and the like. For ease of representation, only one bold line is used for representation in FIG. 7, but this does not mean that there is only one bus, only one type of bus, or the like.

The foregoing receiving/sending module (transceiver module) may be an interface circuit of the apparatus, and is configured to receive/send a signal from/to another apparatus. For example, when the apparatus is implemented in a form of chip, the transceiver module is an interface circuit that is of the chip and that is configured to receive/send a signal from/to another chip or apparatus.

An embodiment of this application further provides a computer program product including instructions. When the computer program product runs on the foregoing apparatus, the charging pile upgrade method in the foregoing embodiment is performed.

An embodiment of this application provides a computer-readable storage medium. The computer-readable storage medium stores a computer program. When the computer program is run, the charging pile upgrade method in the foregoing embodiment is implemented.

For example, division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. A part or all of the units may be selected based on actual requirements to achieve the objectives of the solutions of embodiments.

In addition, functional units in embodiments of this application may be integrated into one processing module, each of the units may exist alone physically, or two or more units may be integrated into one unit. The integrated unit may be implemented in a form of hardware, or may be implemented in a form of software functional unit.

In embodiments of this application, module division is an example, and is merely logical function division. During actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of software functional module.

All or a part of the methods in embodiments of this application may be implemented by using software, hardware, firmware, or any combination thereof. When software is used to implement embodiments, all or a part of the embodiments may be implemented in a form of computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium, or the like.

In embodiments of this application, without a logical contradiction, embodiments may be mutually referenced. For example, methods and/or terms in the method embodiments may be mutually referenced. For example, functions and/or terms in the apparatus embodiments may be mutually referenced. For example, functions and/or terms in the apparatus embodiments and the method embodiments may be mutually referenced.

A person skilled in the art can make various modifications and variations to this application without departing from the scope of this application. This application is intended to cover these modifications and variations of this application provided that these modifications and variations fall within the scope of protection defined by the following claims of this application and their equivalent technologies.

## Claims

1. A charging pile upgrade method, wherein the method further comprises:
receiving request information from a first charging terminal, wherein the request information is used to request code used for upgrading a charging pile; and
sending third code to the first charging terminal when a version of first code is earlier than a version of second code, wherein
the first code is run by the charging pile and is used by the charging pile to supply power to a charging terminal, the second code is run by the first charging terminal and is used by the first charging terminal to perform charging, and the third code is used to upgrade the first code.

2. The method according to claim 1, wherein before sending the third code to the first charging terminal, the method further comprises:
receiving first information from the first charging terminal, wherein the first information indicates that the first charging terminal supports establishing a short-range communication connection to the charging pile.

3. The method according to claim 1 or 2, wherein before sending the third code to the first charging terminal, the method further comprises:
receiving second information from the first charging terminal, wherein the second information indicates that the first charging terminal is to be charged by the charging pile.

4. The method according to claim 3, wherein the second information is determined based on a scheduled charging operation of a user.

5. The method according to any one of claims 1 to 4, wherein the method further comprises:
sending third information to user equipment associated with the first charging terminal, wherein the third information indicates the user equipment to output first prompt information, and the first prompt information is used to query the user whether to allow the first charging terminal to provide, for the charging pile, the code used for upgrade; and
receiving fourth information from the user equipment, wherein the fourth information indicates that the user allows the first charging terminal to provide, for the charging pile, the code used for upgrade.

6. The method according to any one of claims 1 to 5, wherein the method further comprises:
receiving sixth information from the first charging terminal, wherein the sixth information indicates that the first charging terminal is incapable of establishing the short-range communication connection to the charging pile, or indicates that the first charging terminal is incapable of sending, to the charging pile, the code used for upgrade;
querying for a second charging terminal that supports establishing a short-range communication connection to the charging pile; and
sending the third code to the second charging terminal.

7. A charging pile upgrade method, wherein the method further comprises:
obtaining third code from a server when a version of first code is earlier than a version of second code, wherein the first code is run by a charging pile and is used by the charging pile to supply power to a charging terminal, the second code is run by a first charging terminal and is used by the first charging terminal to perform charging, and the third code is used to upgrade the first code; and
sending the third code to the charging pile through a short-range communication connection.

8. The method according to claim 7, wherein the method further comprises:
receiving seventh information, wherein the seventh information indicates the first code used by the charging pile, or indicates version information of the first code.

9. The method according to claim 7 or 8, wherein before obtaining the third code from the server, the method further comprises:
sending second information to the server, wherein the second information indicates that the first charging terminal is to be charged by the charging pile.

10. The method according to any one of claims 7 to 9, wherein the method further comprises:
sending third information to user equipment associated with the first charging terminal, wherein the third information indicates the user equipment to output first prompt information, and the first prompt information is used to query a user whether to allow the first charging terminal to provide, for the charging pile, code used for upgrade; and
receiving fourth information from the user equipment, wherein the fourth information indicates that the user allows the first charging terminal to provide, for the charging pile, the code used for upgrade.

11. The method according to any one of claims 7 to 10, wherein the method further comprises:
receiving a first request from the charging pile, wherein the first request is used to request the first charging terminal to provide, for the charging pile, the code used for upgrade.

12. A charging pile upgrade method, applied to a charging pile, wherein the method further comprises:
sending a first request to the first charging terminal through a short-range communication connection when a version of first code is earlier than a version of second code, wherein the first request is used to request code for upgrading a version of the charging pile, wherein
the first code is run by the charging pile and is used by the charging pile to supply power to a charging terminal, and the second code is run by the first charging terminal and is used by the first charging terminal to perform charging;
receiving third code from the first charging terminal through the short-range communication connection; and
upgrading the first code based on the third code.

13. The method according to claim 12, wherein the method further comprises:
receiving eighth information, wherein the eighth information indicates the second code used by the first charging terminal, or indicates version information of the second code.

14. A charging pile upgrade apparatus, comprising a module or unit configured to implement the method according to any one of claims 1 to 13.

15. A chip, comprising a processor, wherein the processor is coupled to a memory, the memory is configured to store instructions, and when the instructions are executed by the processor, the method according to any one of claims 1 to 13 is performed.

16. A computer-readable storage medium, wherein the storage medium stores a computer program or instructions, and when the computer program or the instructions are executed by a communication apparatus, the method according to any one of claims 1 to 13 is implemented.

17. A computer program product, wherein when the computer program product runs on a communication apparatus, the method according to any one of claims 1 to 13 is implemented.
